Europäisches Patentamt

European Patent Office

Office européen des brevets

(19)

(11) Veröffentlichungsnummer: **0 198 230**
**B1**

(12) # EUROPÄISCHE PATENTSCHRIFT

(45) Veröffentlichungstag der Patentschrift:
08.06.88

(51) Int. Cl.⁴: **B 23 H 7/10,** B 23 H 9/18,
**B 23 H 7/26**

(21) Anmeldenummer: **86103414.8**

(22) Anmeldetag: **13.03.86**

(54) **Elektroerosionsmaschine.**

(30) Priorität: **01.04.85 DE 3511929**

(43) Veröffentlichungstag der Anmeldung:
**22.10.86 Patentblatt 86/43**

(45) Bekanntmachung des Hinweises auf die Patenterteilung:
**08.06.88 Patentblatt 88/23**

(84) Benannte Vertragsstaaten:
**CH DE FR GB IT LI LU SE**

(56) Entgegenhaltungen:
**DE-A-3 201 544**

(73) Patentinhaber: **AG für industrielle Elektronik AGIE
Losone bei Locarno, CH- 6616 Losone/Locarno
(CH)**

(72) Erfinder: **Medici, Brenno, CH- 6671 Peccia (CH)**
Erfinder: **Lodetti, Attilio, Via La Pare 12, CH- 6616
Losone (CH)**

(74) Vertreter: **EGLI- EUROPEAN PATENT ATTORNEYS,
Widenmayerstrasse 5, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 198 230 B1

## Beschreibung

Die Erfindung bezieht sich auf eine Elektroerosionsmaschine mit koaxial im Abstand zueinander angeordneten, zwangsgekoppelt schwenkbaren Drahtführungsköpfen für eine drahtförmige Elektrode und mit je einem Schwenkantrieb pro Schwenkachse.

Eine derartige Elektroerosionsmaschine ist aus der. DE-A1-3 201 544 bekannt. Um bei Draht-Erosionsmaschinen konische oder sonstige schräge Schnitte durchführen zu können, muss die Drahtelektrode schräg gestellt werden. Um einen einwandfreien Auslauf und Einlauf der Elektrode in die Drahtführungsköpfe zu erhalten, ist es wünschenswert, die Achsen der Drahtführungsköpfe stets in einer Linie mit dem zwischen den Drahtführungsköpfen befindlichen Draht auszurichten. Die Drahtführungsköpfe sollen also koaxial zueinander liegen. Zur Lösung dieser Aufgabe schlägt die DE-A1-3 201 544 vor, die beiden Drahtführungsköpfe über ein Parallelogrammgestänge zwangsweise miteinander zu koppeln. Jedem Drahtführungskopf ist dabei ein eigenes Parallelogrammgestänge zugeordnet, wobei die beiden Parallelogrammgestänge durch eine gemeinsame Vertikalachse miteinander verbunden sind. Diese Vertikalachse ist auch telescopartig verlängerbar. Sie liegt parallel zu dem zwischen den Drahtführungsköpfen befindlichen Elektrodenabschnitt und sorgt über die an ihr befestigten beiden Parallelogrammgestänge für die koaxiale Ausrichtung der Drahtführungsköpfe.

Nachteilig an dieser Anordnung ist es, dass die Vertikalachse nur einen begrenzten Abstand zur Elektrode haben kann, entsprechend der Länge der Parallelogrammlenker. Damit ist aber der Arbeitsbereich der Elektroerosionsmaschine beschränkt, so dass sie für grössere Werkstücke ungeeignet ist. Macht man das Parallelogrammgestänge recht gross, so leidet durch thermische Ausdehnungen, Massungenauigkeiten und Spiel die exakte Ausrichtung der Drahtführungsköpfe.

Mit der vorliegenden Erfindung sollen diese Nachteile beseitigt werden.

Aufgabe der Erfindung ist es daher, die Elektroerosionsmaschine der eingangs genannten Art dahingehend zu verbessern, dass eine koaxiale Ausrichtung der beiden Drahtführungsköpfe präzise mit geringem baulichem Aufwand möglich ist, ohne dass der "Arbeitsbereich" zwischen den beiden Drahtführungsköpfen hierdurch eingeschränkt ist.

Diese Aufgabe wird durch die im kennzeichnenden Teil des Patentanspruches 1 angegebenen Merkmale gelöst. Vorteilhafte Ausgestaltungen und Weiterbildungen der Erfindung sind den Unteransprüchen zu entnehmen.

Der Grundgedanke der Erfindung liegt also darin, statt eines mechanischen Parallelogrammgestännes eine hydraulische Zwangskopplung der beiden Drahtführungsköpfe vorzunehmen. Damit erhält man eine grössere Konstruktionsfreiheit, da die erforderlichen Hydraulikzylinder eine verhältnismässig geringe Baugrösse haben und die ihnen zugeordneten Steuerzylinder an beliebigen Stellen der Maschine angeordnet werden können, da die Hydraulikleitungen, die die Verstellzylinder mit den Steuerzylindern verbinden, beliebig lang sein können. Nach einer Variante der Erfindung werden die Steuerzylinder über elektronisch gesteuerte Verstellmotoren betätigt, während nach einer anderen Variante die Verstellung der Steuerzylinder durch die Schlittenbewegung der Verstellschlitten für die Konikeinstellung bewirkt wird. Bei dieser Variante erfolgt mit den Merkmalen der Ansprüche 8 bis 10 zusätzlich noch eine mechanische und konstruktiv einfach aufgebaute Kompensation, die den vertikalen Abstand der beiden Drahtführungsköpfe berücksichtigt und die sich bei der Schlittenbewegung ergebende Winkelverschwenkung der Drahtführungsköpfe entsprechend diesem vertikalen Abstand korrigiert.

Im folgenden wird die Erfindung anhand von Ausführungsbeispielen im Zusammenhang mit der Zeichnung ausführlicher erläutert.

Es zeigt:

Fig. 1 ein schematisches Prinzipschaltbild der erfindungswesentlichen Teile der Elektroerosionsmaschine;

Fig. 2 ein ähnliches Prinzipschaltbild nach einer Weiterbildung der Erfindung.

Gleiche Bezugszeichen in den einzelnen Figuren bezeichnen gleiche bzw. einander entsprechende Teile.

Die Elektroerosionsmaschine besitzt zwei im Abstand zueinander angeordnete Drahtführungsköpfe, deren oberer mit 1 und deren unterer mit 2 bezeichnet sind. Die Achse des oberen Drahtführungskopfes 1 ist mit 3 bezeichnet während die Achse des unteren Drahtführungskopfes 2 mit 4 bezeichnet ist. Zwischen den einander gegenüberliegenden Spitzen der Drahtführungsköpfe befindet sich die Arbeits- bzw. Erosionsstrecke der Maschine, durch welche eine drahtförmige Elektrode 5 verläuft. Für ein einwandfreies Erosionsergebnis ist es wünschenswert, dass die Achsen 3 und 4 koaxial zueinander ausgerichtet sind, so dass die Achsen 3 und 4 und die Elektrode 5 im Arbeitsspalt auf einer gemeinsamen Linie liegen und zwar auch dann, wenn bei schräger Ausrichtung der Drahtführungsköpfe, wie es beispielsweise zum Schneiden eines Konus erforderlich ist, die Drahtführungsköpfe gegenüber der Z-Achse (senkrechte Achse) gekippt sind.

Beide Drahtführungsköpfe 1 und 2 sind in Schwenklagern 6 bzw. 7 gelagert und können in diesen Lagern um zwei Achsen (Achsen U und V) gekippt bzw. geschwenkt werden. Ein Schwenken um die Achse U bewirkt damit also

ein Verdrehen der Köpfe um einen Winkel β in der durch die Achsen Z und V aufgespannten Ebene. Ein Schwenken der Köpfe um die Achse V bewirkt dagegen eine Drehung um den Winkel α in der durch die Achsen Z und U aufgespannten Ebene.

Um die erwähnte koaxiale Ausrichtung der beiden Köpfe zu erhalten, muss natürlich einer der Köpfe - normalerweise der obere Drahtführungskopf 1 - noch zusätzlich in der durch die Koordinaten U und V aufgespannten Ebene verschoben werden, was durch die in V- bzw. U-Richtung verschiebbaren Schlitten 8 bzw. 9 der Maschine erfolgt (mit den Koordinaten U und V wird üblicherweise die Verstellung des Werkzeuges bezeichnet, während durch die Koordinaten X und Y die Verstellung des Werkstücks bezeichnet wird).

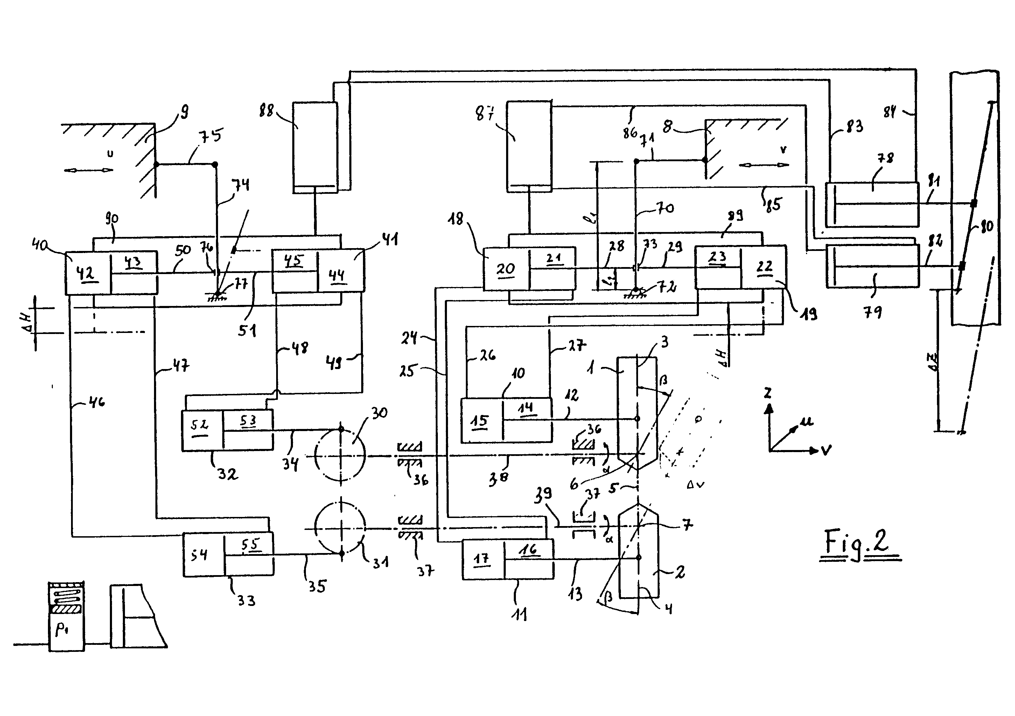

Im behandelten Ausführungsbeispiel ist demnach der obere Drahtführungskopf 1 durch die Schlitten 8 und 9 (Fig. 2) in der UV-Ebene translatorisch verschiebbar, zusätzlich zu der Schwenkmöglichkeit um die Winkel α und β, welche die "Orientierung" der Drahtführungsköpfe bestimmen.

Zur Schwenkung der Drahtführungsköpfe 1 und 2 um den Winkel β sind zwei Verstellzylinder 10 und 11 vorgesehen, die mit ihrer Kolbenstange 12 bzw. 13 gelenkig an dem zugeordneten Drahtführungskopf 1 bzw. 2 befestigt sind, wobei der Anlenkpunkt der Kolbenstangen 12 bzw. 13 an dem zugeordneten Zylinder 1 bzw. 2 gegenüber dem durch die Schwenklager 6 bzw. 7 definierten Schwenkpunkt um einen Abstand versetzt angeordnet sind und zwar ausgehend von den Schwenklagern 6 bzw. 7 in einer von der Arbeitsstrecke fortweisenden Richtung.

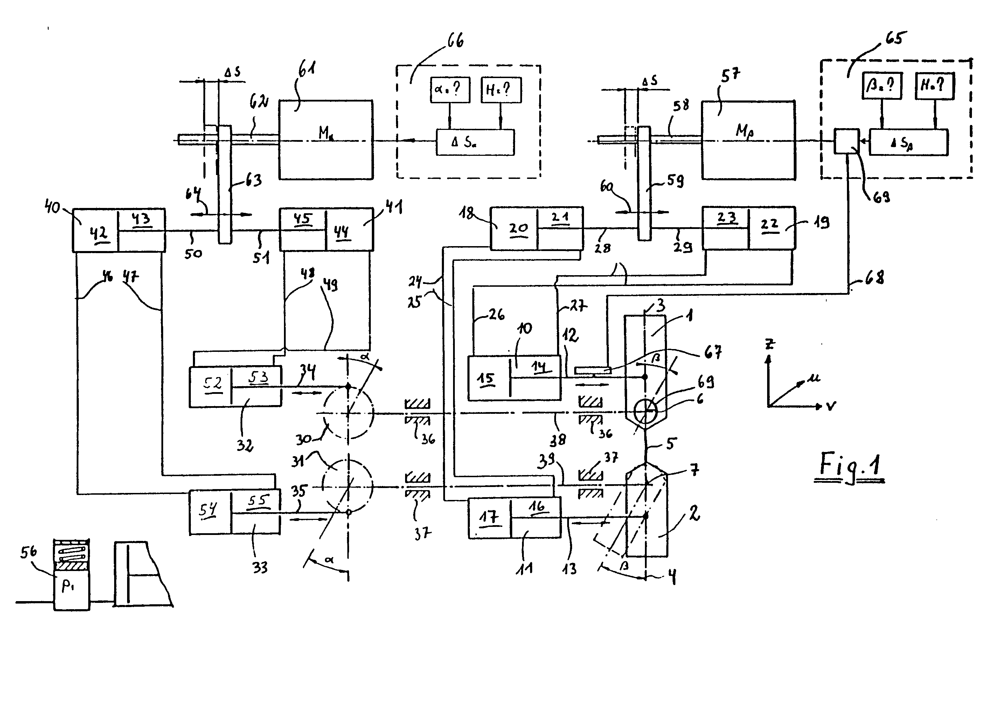

Die beiden Verstellzylinder 11 und 12 weisen jeweils zwei durch den verschiebbaren Kolben getrennte Kammern 14 und 15 bzw. 16 und 17 auf. Die beiden Verstellzylinder 10 und 11 sind nun so miteinander zwangsgekoppelt, dass sie stets gleichsinnig und um denselben Betrag (Winkel β) verschwenkt werden. Hierzu sind zwei Steuerzylinder 18 bzw. 19 vorgesehen, wobei der Steuerzylinder 18 für die Verstellung des unteren Drahtführungskopfes 2 und der Steuerzylinder 19 für die Verstellung des oberen Drahtführungskopfes 1 zuständig ist. Beide Steuerzylinder 18 und 19 weisen je zwei durch einen verschiebbaren Kolben getrennte Kammern 20 und 21 bzw. 22 und 23 auf. Die Kammer 20 ist dabei über eine Leitung 24 mit der Kammer 17 verbunden während die Kammer 21 über eine Leitung 25 mit der Kammer 16 verbunden ist. In analoger Weise ist die Kammer 22 über eine Leitung 26 mit der Kammer 15 verbunden, während die Kammer 23 über eine Leitung 27 mit der Kammer 14 verbunden ist. Die Verstellzylinder 10 und 11 und die Steuerzylinder 18 und 19 sind hierbei im wesentlichen gleich aufgebaut, um einen "Gleichlauf" zu erzielen. Zur Vervollständigung der erwähnten Zwangskopplung sind die Kolbenstangen 28 und 29 der Steuerzylinder 18 und 19 miteinander verbunden. Wird also beispielsweise die Kolbenstange 28 nach links verschoben, so wird auch die Kolbenstange 29 nach links verschoben. Hierdurch wird die Kammer 20 verkleinert und das in ihr befindliche Fluid wie z. B. Hydrauliköl wird in entsprechendem Masse in die Kammer 17 gedrückt, die sich entsprechend vergrössert. Die Kammer 16 verkleinert sich dadurch und drückt das in ihr befindliche Hydrauliköl in die sich entsprechend vergrössernde Kammer 21. Damit wird der untere Drahtführungskopf 2 um einem Winkel β in der Zeichenebene der Fig. 1 linksdrehend verschwenkt. Durch die gegenüberliegende Anordnung der Kolbenstangen 28 und 29 wird die Kammer 23 verkleinert und die Kammer 22 entsprechend vergrössert. Im Ergebnis wird damit der Kolben und die Kolbenstange 12 des Verstellzylinders 10 nach links gedrückt (Vergrösserung der Kammer 14 und Verkleinerung der Kammer 15) und zwar um das gleiche Mass wie der Kolben und die Kolbenstange 13 des Verstellzylinders 11 nach rechts verschoben werden. Damit wird der obere Drahtführungskopf 1 um denselben Winkel β in der Zeichenebene der Fig. 1 linksdrehend verschwenkt. Beide Köpfe 1 und 2 haben damit dieselbe Orientierung. Damit liegen ihre Achsen zwar parallel zueinander, jedoch noch nicht koaxial, da die Schwenkpunkte der Schwenklager 6 und 7 in Z-Richtung ja noch einen Abstamd zueinander haben. Um nach der Schwenkung um den Winkel β die koaxiale Ausrichtung zu erhalten, muss - wie aus Fig. 2 mit dem in gestrichelten Linien dargestellten Drahtführungskopf 1 ersichtlich - der obere Drahtführungskopf 1 noch in V-Richtung um den Betrag Δv translatorisch verschoben werden, was über den Schlitten 8 erfolgt. Es ist klar, dass auch der Verstellzylinder 10 um denselben Betrag verschoben werden muss. Somit genügt es, wenn der Verstellzylinder 10 an einem Schlitten 8 befestigt ist und damit die gleiche translatorische Bewegung vollzieht wie der obere Drahtführungskopf 1.

Die gleichsinnige Verschwenkung der Drahtführungsköpfe 1 und 2 um den in der ZU-Ebene liegenden Winkel erfolgt in analoger Weise über hydraulisch zwangsgekoppelte Verstellzylinder 32 bzw. 33 und entsprechende, den Verstellzylindern zugeordnete Steuerzylinder 40 und 41. Im dargestellten Ausführungsbeispiel erfolgt die Umsetzung der translatorischen Bewegung der Kolbenstangen 34 bzw. 35 der Verstellzylinder 32 bzw. 33 allerdings über je einen hier als Kurbeltrieb 30 bzw. 31 ausgebildeten Umsetzer einer Linearbewegung in eine Rotationsbewegung. Hierzu sind die beiden Kolbenstangen 34 und 35 exzentrisch an Kurbelscheiben gelenkig befestigt, wobei die Mittelachsen der Kurbelscheiben mit Antriebswellen 38 bzw. 39 verbunden sind, deren andere Enden mit den Drahtführungsköpfen 1 und 2 in den Schwenklagern 6 und 7 verbunden sind. Die Wellen 38 und 39 sind in geeigneter Weise gelagert, wie durch die Lager 36 und 37 angedeutet.

Da auch bei einer Schwenkung der Köpfe um den Winkel α zur Erzielung der koaxialen Ausrichtung noch eine translatorische Verschiebung des oberen Drahtführungskopfes 1 in Richtung U erforderlich ist, sind hier der Kopf 1, der Kurbeltrieb 30 und der Verstellzylinder 32 zusammen mit dem Schlitten U verschiebbar.

Ansonsten entsprechen Aufbau und Wirkungsweise der Verstellzylinder 32 und 33 sowie der Steuerzylinder 40 und 41 den Verstellzylindern 10 und 11 sowie den dazu zugeordneten Steuerzylindern 18 und 19. Im einzelnen ist die Kammer 52 des Verstellzylinders 32 über eine Leitung 49 mit der Kammer 44 des Steuerzylinders 41 verbunden. Entsprechend ist die andere Kammer 53 des Verstellzylinders 32 über eine Leitung 48 mit der anderen Kammer 45 des Steuerzylinders 41 verbunden. Die Kammer 54 des Verstellzylinders 33 ist über eine Leitung 46 mit der Kammer 42 des Steuerzylinders 40 verbunden, während die andere Kammer 55 des Verstellzylinders 33 über eine Leitung 47 mit der anderen Kammer 43 des Steuerzylinders 40 verbunden ist.

Die beiden Kolbenstangen 50 und 51 der Steuerzylinder 40 und 41 sind wiederum fest miteinander gekoppelt, so dass sie nur zusammen gleichsinnig bewegt werden können.

Um im gesamten Hydrauliksystem einen konstanten Druck aufrechterhalten zu können und eventuelle Leckverluste ausgleichen zu können, ist in jedem Kreislauf noch ein Druckspeicher 56 vorgesehen, beispielsweise in Form eines federbelasteten Speichervolumens. Für einen vollständigen Druckausgleich kann in jede der Leitungen 24, 25, 26, 27, 46, 47, 48 und 49 ein derartiger Druckspeicher 56 zwischengeschaltet sein.

Die Verstellung der Steuerzylinder 18 und 19 bzw. 40 und 41 erfolgt in dem Ausführungsbeispiel der Fig. 1. elektromotorisch. Ein erster Verstellmotor 57 für den Winkel β verschiebt bei Drehung seiner Welle 58 beispielsweise über einen Spindelantrieb einen Schieber 59 geradlinig in Richtung des Pfeiles 60, wodurch die Kolbenstangen 28 und 29, die beide mit dem Schieber 59 verbunden sind, um den gleichen Betrag $\Delta S$ verschoben werden.

In gleicher weise ist für die Verstellung des Winkels α ein zweiter Verstellmotor 61 vorgesehen, dessen Welle 62 einen Schieber 63 um den Betrag $\Delta S$ geradlinig in Richtung des Pfeiles 64 verschiebt, wobei der Schieber 63 mit den Kolbenstangen 50 und 51 verbunden ist.

Beiden Verstellmotoren 57 und 61 ist jeweils eine Steuereinrichtung 65 bzw. 66 zugeordnet, welche über extern eingegebene (beispielsweise über eine Tastatur oder eine nummerische Maschinensteuerung) Werte für die Winkel α und β sowie die Schneidhöhe H die erforderlichen Werte für die Verschiebung der Schieber 59 und 63, d. h. die Werte $\Delta S_\alpha$ und $\Delta S_\beta$ errechnen und in Abhängigkeit von den ermittelten Werten die Verstellmotoren 57 und 61 antreiben. Diese Motoren können dabei beispielsweise Schrittmotoren sein.

Zusätzlich kann noch ein geschlossener Regelkreis vorgesehen sein, wie für die Verstellung des Winkels β am oberen Drahtführungskopf 1 gezeigt. Über einen Messfühler 67 wird die Verschiebung der Kolbenstange 12 und damit der Winkel β gemessen und über eine elektrische Steuerleitung 68 einem Regler 69 zugeführt, der aus dem gemessenen Signal und dem Sollwertsignal $\Delta S_\beta$ ein Stellsignal für den Motor 57 erzeugt. In gleicher Weise kann ein Regelkreis auch für den Winkel α gebildet werden, indem z. B. die Verschwenkung des Drahtführungskopfes 1 um den Winkel α mit einem Messfühler 69 gemessen wird, der in dem Schwenklager 6 angeordnet ist. Das gemessene Signal für den Winkel α kann dann in entsprechender Weise in der Steuereinrichtung 66 zur Regelung verwendet werden.

Fig. 2 zeigt eine Weiterbildung der Erfindung auf mechanischer Basis, was bedeutet, dass anstelle der Verstellmotoren 57 und 61 die Kolbenstangen 28 und 29 bzw. 50 und 51 der Verstellzylinder über ein Hebelgestänge betätigt werden, welches mit den V- bzw. U-Schlitten 8 bzw. 9 gekoppelt ist. Hierzu ist an dem Schlitten 8 ein Hebelgestänge befestigt, das aus zwei gelenkig miteinander gekoppelten Hebelstangen 70 und 71 besteht. Das freie Ende der Stange 71 ist mit dem Schlitten 8 gekoppelt, während das freie Ende der Hebelstange 70 in einem ortsfesten Lager 72 gelenkig gehalten ist. Der gemeinsame Verbindungspunkt der Kolbenstangen 28 und 29 ist an der Hebelstange 70 geführt, beispielsweise mittels einer Hülse 73, an der die Kolbenstange 28 und 29 befestigt sind und durch welche die Hebelstange 70 gesteckt ist. Die Hülse 73 befindet sich dabei in einem Abstand $l_2$ von dem Drehpunkt des Lagers 72 entfernt. Die Hebelstange 70 hat dabei eine Gesamtlänge von $l_1$. Wird der Schlitten 8 nun verschoben, so werden die Kolbenstangen 28 und 29 entsprechend dem Hebelübersetzungsverhältnis $l_2/l_1$ ebenfalls verschoben wodurch die Schwenkung des Drahtführungskopfes 1 um den Winkel β erfolgt.

In entsprechender Weise ist der Schlitten 9 über ein Hebelgestänge bestehend aus Stangen 74 und 75, eine Hülse 76 und ein ortsfestes Lager 77 zur Verschiebung der Kolbenstangen 50 und 51 ausgelegt. Eine Verschiebung des Schlittens 9 hat damit eine Schwenkbewegung der Drahtführungsköpfe 1 und 2 um den Winkel α zur Folge.

Da die Schwenkwinkel hier durch Verschiebung der U- und V-Schlitten verändert wird, ist darauf hinzuweisen, dass der Zusammenhang zwischen der Schlittenverstellung im U- und V-Richtung und der Verschwenkung der Drahtführungsköpfe um die Winkel α und β noch von der Schneidhöhe, also letztlich dem Abstand in Z-Richtung zwischen den beiden Drahtführungsköpfen 1 und

2 abhängt. Zur Erfassung des Einflusses der Schneidhöhe ist ein Kompensationssystem vorgesehen, das wie folgt aufgebaut ist. Zwei Steuerzylinder 78 und 79 sind mit einer Kompensationsstange 80 verbunden und zwar über ihre Kolbenstangen 81 und 82, deren freie Enden mittels Hülsen längs der Kompensationsstange 80 gleiten können. Die Kompensationsstange ist dabei schräg gestellt unter einem vorgegebenen Winkel zur Z-Achse. Die jeweils beiden Kammern der Steuerzylinder 78 und 79 sind über Leitungen 83 und 84 bzw. 85 und 86 mit entsprechenden Kammern von Kompensationszylindern 87 bzw. 88 verbunden, welche je einen Rahmen 89 bzw. 90, an denen die Steuerzylinder 18 und 19 bzw. 40 und 41 gehalten sind, über ihre Kolbenstange verschieben und zwar um einen Betrag ΔH bei einer Z-Verschiebung der Drahtführungsköpfe 1 und 2 um den Betrag ΔZ. Durch diese Verschiebung der Steuerzylinder 18, 19, 40 und 41 werden die Hebelübersetzungsverhältnisse der Hebelstangen 70 und 74 verändert und damit der Verstellweg der Steuerzylinder 18, 19 bzw. 40, 41 an die Schneidhöhe angepasst. Die beiden Steuerzylinder 78 und 79 lassen sich in Z-Richtung zusammen mit dem oberen Drahtführungskopf 1 verschieben, während die Kompensationsstange ortsfest ist. Umgekehrt kann natürlich auch bei ortsfesten Steuerzylindern 78 und 79 die Kompensationsstange 80 in Z-Richtung zusammen mit dem oberen Drahtführungskopf 1 verstellt werden.

**Patentansprüche**

1. Elektroerosionsmaschine mit zweikoaxial im Abstand zueinander angeordneten, zwangsgekoppelt schwenkbaren Drahtführungsköpfen (1, 2) für eine drahtförmige Elektrode (5) und mit je einem Schwenkantrieb pro Schwenkachse, dadurch gekennzeichnet, dass der Schwenkantrieb ein gleichzeitig die Zwangskopplung bildender Hydraulikantrieb (10, 11, 18, 19, 32, 33, 40, 41) ist.

2. Elektroerosionsmaschine nach Anspruch 1, dadurch gekennzeichnet, dass jedem Drahtführungskopf (1 und 2) für jeden Schwenkwinkel (α und β) je ein Verstellzylinder (10, 11, 32, 33) zugeordnet ist, dessen Kolbenstange (12, 13, 34, 35) - ggf. über einen Kurbeltrieb (30, 31) - mit dem zugeordneten Drahtführungskopf (1, 2) verbunden ist, dass jeder Verstellzylinder (10, 11, 32, 33) hydraulisch (Leitungen 24, 25, 26, 27, 46, 47, 48, 49) mit einem zugeordneten Steuerzylinder (18, 19, 41, 40) verbunden ist, derart, dass eine Verschiebung des Kolbens der Steuerzylinder eine gleichgrosse Verschiebung des Kolbens des zugeordneten Verstellzylinders zur Folge hat und dass die Steuerzylinder paarweise (18 und 19 bzw. 40 und 41) (für die Schwenkwinkel (α und β)) über ihre

Kolbenstangen (28, 29 bzw. 50, 51) miteinander verbunden sind, wobei die Kolbenstangen durch extern aufbringbare machanische Kräfte verschiebbar sind.

3. Elektroerosionsmaschine nach Anspruch 2, dadurch gekennzeichnet, dass die Verstellung der Kolbenstangen (28, 29 bzw. 50, 51) der Steuerzylinder mittels elektronisch gesteuerter Verstellmotoren (57 bzw. 61) erfolgt.

4. Elektroerosionsmaschine nach Anspruch 2, dadurch gekennzeichnet, dass die Verstellung der Kolbenstangen (28, 29 bzw. 50, 51) der Steuerzylinder mittels je eines Hebelgestänges (70, 71 bzw. 74, 75) erfolgt, wobei die Hebelgestänge je mit einem (Werkzeug-) Schlitten (8, 9) (Achsen U und V) der Maschine gekoppelt sind.

5. Elektroerosionsmaschine nach einem der Ansprüche 1 bis 4, dadurch gekennzeichnet, dass einer der Drahtführungsköpfe, vorzugsweise der obere Drahtführungskopf (1), zusätzlich zur Verschwenkung um die Schwenkwinkel (α und/oder β) entsprechend dem vertikalen Abstand (Z-Achse) der Drahtführungsköpfe (1 und 2) über die Schlitten (8, 9) so translatorisch verschiebbar sind, dass die Achsen (3 und 4) der Drahtführungsköpfe (1 und 2) koaxial zueinander liegen, d. h. miteinander fluchten.

6. Elektroerosionsmaschine nach Anspruch 5, dadurch gekennzeichnet, dass die Verstellzylinder (10, 32) zusammen mit dem zugeordneten Drahtführungskopf (1) mittels der Schlitten (8, 9) translatorisch (ΔU, ΔV) verschiebbar sind.

7. Elektroerosionsmaschine nach einem oder mehreren der Ansprüche 1, 2, 5, 6, gekennzeichnet durch Messeinrichtungen (67, 69) zur Messung des Schwenkwinkels (α, β) mindestens eines der Drahtführungsköpfe (1 oder 2), wobei die Ausgänge der Messeinrichtungen (67, 69) Reglern (69) zugeführt werden, welche die Verstellmotoren (57 bzw. 61) ansteuern.

8. Elektroerosionsmaschine nach Anspruch 4, gekennzeichnet durch ein Kompensationssystem (80, 78, 79, 87, 88) zur Verstellung des wirksamen Hebelübersetzungsverhältnisses (l2/l1) des Hebelgestänges (70, 71, 74, 75) in Abhängigkeit vom vertikalen Abstand (Z-Achse) der beiden Drahtführungsköpfe (1 und 2).

9. Elektroerosionsmaschine nach Anspruch 8, dadurch gekennzeichnet, dass das Kompensationssystem eine schräg stehende Kompensationsstange (80) aufweist, an welcher Kolbenstangen (81, 82) von Steuerzylindern (78, 79) verschiebbar geführt sind, dass die Steuerzylinder (78, 79) hydraulisch (Leitungen 83, 84, 85, 86) mit Kompensationszylindern (87, 88) verbunden sind, welche das Hebelübersetzungsverhältnis (l2/l1) der Hebelgestänge (70, 71; 74, 75) verändern und dass die beiden Steuerzylinder (78 und 79) in Abhängigkeit vom vertikalen Abstand (ΔZ) der beiden Drahtführungsköpfe (1, 2) relativ zur Kompensationsstange (80) in Z-Richtung verschiebbar sind.

10. Elektroerosionsmaschine nach Anspruch 9, dadurch gekennzeichnet, dass die Kompensationszylinder (87, 88) je mit einem Träger (89, 90) verbunden sind, auf denen jeweils die Steuerzylinder (18, 19 bzw. 40, 41) befestigt sind.

11. Elektroerosionsmaschine nach einem oder mehreren der Ansprüche 1 bis 10, dadurch gekennzeichnet, dass in allen Hydraulikkreisen Druckspeicher, beispielsweise in Form von Feder vorgespannten Speichervolumen (56) zwischengeschaltet sind.


**Claims**

1. Electroerosion machine with two adjacent wire-guiding heads (1, 2) for a filamentary electrode (5), which are arranged co-axially end spaced apart from one another and which are restrainably coupled together and can be swivelled, and which each have one rotation drive per axis of rotation, characterised in that the rotation drive is a hydraulic drive (10, 11, 18, 19; 32, 33, 40, 41) which simultaneously constitutes the restraining coupling.

2. Electroerosion machine according to claim 1, characterised in that there is associated respectively with each wire-guiding head (1 and 2) for each angle of rotation ($\alpha$ and $\beta$), one adjusting cylinder (10, 11, 32, 33) whose piston rod (12, 13, 34, 35) is connected to the assigned wire-guiding head (1, 2), if necessary via a crank mechanism, in that each adjusting cylinder (10, 11, 32, 34) is connected hydraulically (leads 24, 25, 26, 27, 46, 47, 48, 49) to an associated control cylinder (18, 19, 41, 40) in such a way that displacing the piston of the control cylinders results in an equal displacement of the piston of the associated adjusting cylinder, and that the control cylinders are connected together in pairs (18 and 19, or 40 and 41) (for the angles of rotation ($\alpha$ and $\beta$)) via their piston rods (28, 29, or 50, 51), wherein the piston rods can be displaced by externally applied mechanical forces.

3. Electroerosion machine according to claim 2, characterised in that the displacement of the piston rods (28, 29, or 50, 51) of the control cylinders is achieved by means of electronically controlled regulating motors (57 or 61).

4. Electroerosion machine according to claim 2, characterised in that the displacement of the piston rods (28, 29, or 50, 51) of the control cylinders is achieved by means of respective lever elements (70, 71, or 74, 75), wherein the lever elements are respectively coupled with a (tool) slide (8, 9) (axes U and V) of the machine.

5. Electroerosion machine according to one of claims 1 to 4, characterised in that one of the wire-guiding heads, preferably the upper wire-guiding head (1), can be additionally displaced in a translatory manner by means of the slides (8 and 9) so that it turns through the angles of rotation ($\alpha$ and/or $\beta$) corresponding to the vertical spacing (Z-axis) of the wire-guiding heads (1 and 2), so that the axes (3 and 4) of the wire-guiding heads (1 and 2) lie co-axially relative to each other, i.e. they are in alignment with each other.

6. Electroerosion machine according to claim 5, characterised in that the adjusting cylinders (10, 32), together with the associated wire-guiding head (1), can be displaced in a translatory manner ($\Delta$U, $\Delta$V) by means of the slides (8, 9).

7. Electroerosion machine according to one or more of claims 1, 2, 5, 6, characterised by measuring devices (67, 69) for measuring the angle of rotation ($\alpha$, $\beta$) of at least one of the wire-guiding heads (1 or 2), the outputs of the measuring devices (67, 69) being fed into controllers, which control the regulating motors (57 or 61).

8. Electroerosion machine according to claim 4, characterised by a compensating system (80, 78, 79, 87, 88) for adjusting the effective leverage (l2/l1) of the lever element (70, 71, 74, 75) depending on the vertical spacing (Z-axis) of the two wire-guiding heads (1 and 2).

9. Electroerosion machine according to claim 8, characterised in that the compensating system has a compensating rod (80) in an inclined position, on which piston rods (81, 82) of control cylinders (78, 79) are movably guided, in that the control cylinders (78, 79) are hydraulically connected (leads 83, 84, 85, 86) to compensating cylinders (87, 88) which alter the leverage (l2, l1) of the lever elements (70, 71; 74, 75), and in that both control cylinders (78 and 79) can be displaced relative to the compensating rod (80) in the Z direction, depending on the vertical spacing ($\Delta$Z) of both wire-guiding heads (1, 2).

10. Electroerosion machine according to claim 9, characterised in that the compensating cylinders (87, 88) are each connected to a carrier (89, 90) to which the respective control cylinders (18, 19, or 40, 41) are attached.

11. Electroerosion machine according to one or several of claims 1 to 10, characterised in that pressure accumulators, for example in the form of storage volumes (56) biased by springs, are interconnected in all hydraulic circuits.


**Revendications**

1. Machine d'électro-érosion comportant deux têtes de guidage de fil (1, 2) pivotantes, couplées positivement, disposées coaxialement et à distance l'une de l'autre, destinées à une électrode (5) en forme de fil et comportant un dispositif d'entraînement de pivotement pour chaque axe de pivotement, caractérisée en ce que le dispositif d'entraînement de pivotement est un organe d'entraînement hydraulique (10, 11, 18, 19; 33, 40, 41) qui constitue en même temps le couplage positif.

2. Machine d'électro-érosion selon la revendication 1, caractérisé en ce qu'un vérin de réglage (10, 11, 32, 33) est affecté à chaque tête de guidage de fil (1 et 2) pour chaque angle de pivotement (α et β), la tige de piston (12, 13, 34, 35) de ce vérin étant reliée, le cas échéant par un système bielle-manivelle (30, 31), à la tête de guidage de fil (1, 2) associée, en ce que chaque vérin de réglage (10, 11, 32, 33) est relié hydrauliquement (conduits 24, 25, 26, 27, 46, 47, 48, 49) à un vérin de commande (18, 19, 41, 40) associé, de telle manière qu'un déplacement du piston du vérin de commande ait pour conséquence un déplacement d'égale amplitude du piston du vérin de réglage associé et en ce que les vérins de commande sont reliés par paires (18 et 19, respectivement 40 et 41) pour les angles de pivotement (α et β) par l'intermédiaire de leurs tiges de piston (28, 29, respectivement 50, 51) les tiges de piston pouvant être déplacées au moyen de forces mécaniques qui peuvent être appliquées de façon externe.

3. Machine d'électro-érosion selon la revendication 2, caractérisée en ce que le réglage des tiges de piston (28, 29, respectivement 50, 51) des vérins de commande s'effectue au moyen de moteurs de réglage (57, respectivement 61) commandés électroniquement.

4. Machine d'électro-érosion selon la revendication 2, caractérisée en ce que le réglage des tiges de piston (28, 29, respectivement 50, 51) des vérins de commande s'effectue au moyen d'une timonerie (70, 71 respectivement 74, 75) dont chacune est couplée à un chariot (d'outil) (8, 9) (axes U et V) de la machine.

5. Machine d'électro-érosion selon l'une des revendications 1 à 4, caractérisée en ce que l'une des têtes de guidage de fil, de préférence la tête de guidage de fil supérieure (1), peut, en plus du pivotement de l'angle de pivotement (α et β), être déplacée en translation au-dessus des chariots (8, 9) de façon correspondant à l'écart vertical (axe Z) des têtes de guidage de fil (1 et 2), de telle façon que les axes (3 et 4) des têtes de guidage de fil (1 et 2) soient situés coaxialement, c'est-à-dire soient alignés.

6. Machine d'électro-érosion selon la revendication 5, caractérisée en ce que les vérins de réglage (10, 32) peuvent effectuer un mouvement de translation (ΔU, ΔV) en même temps que la tête de guidage de fil (1) correspondante, au moyen des chariots (8, 9).

7. Machine d'électro-érosion selon l'une ou plusieurs des revendications 1, 2, 5, 6, caractérisée par des dispositifs de mesure (67, 69) destinés à mesurer l'angle de pivotement (α et β) d'au moins l'une des têtes de guidage de fil (1 ou 2), les sorties des dispositifs de mesure (67, 69) étant reliées à des dispositifs de réglage (69) qui commandent les moteurs de réglage (57, respectivement 61).

8. Machine d'électro-érosion selon la revendication 4, caractérisée par un système de compensation (80, 78, 79, 87, 88) destiné au réglage du rapport effectif de bras de levier ($l_2/l_1$) de la timonerie (70, 71, 74, 75) en fonction de l'écart vertical (axe des Z) des deux têtes de guidage de fil (1 et 2).

9. Machine d'électro-érosion selon la revendication 8, caractérisée en ce que le système de compensation comporte une barre de compensation (80) disposée obliquement, sur laquelle sont guidée de façon à pouvoir coulisser les tiges de piston (81, 82) des vérins de commande (78, 79), en ce que les vérins de commande (78, 79) sont reliés hydrauliquement (conduites 83, 84, 85, 86) aux vérins de compensation (87, 88) lesquels modifient le rapport de bras de levier ($l_2/l_1$) de la timonerie (70, 71; 74, 75) et en ce que les deux vérins de commande (78 et 79) peuvent être déplacés dans la direction Z, par rapport à la barre de compensation (80) en fonction de l'écart vertical (ΔZ) des deux têtes de guidage de fil (1, 2).

10. Machine d'électro-érosion selon la revendication 9, caractérisée en ce que les vérins de compensation (87, 88) sont chacun reliés à un support (89, 90) sur lequel sont fixés chacun des vérins de commande (18, 19, respectivement 40, 41).

11. Machine d'électro-érosion selon une ou plusieurs des revendications 1 à 10, caractérisée en ce que dans tous les circuits hydrauliques sont interposés des accumulateurs de pression, par exemple sous la forme de volumes d'accumulation (56) mis sous pression au moyen d'un ressort.

Fig.1

Fig.2